# EUROPÄISCHE PATENTSCHRIFT

(11) **EP 1 727 710 B1**
(45) Veröffentlichungstag und Bekanntmachung des Hinweises auf die Patenterteilung: **06.02.2008**
(21) Anmeldenummer: 05701494.6
(22) Anmeldetag: 12.01.2005
(51) Int. Cl.: B60R 21/013

(54) **VERFAHREN ZUR AUSLÖSEENTSCHEIDUNG UND ANSTEUERUNG VON RÜCKHALTEEINRICHTUNGEN EINES KRAFTFAHRZEUGES**
METHOD FOR DECIDING UPON TRIGGERING AND CONTROLLING RETAINING DEVICES IN A MOTOR VEHICLE
PROCEDE DESTINE A LA DECISION DE DECLENCHEMENT ET A LA COMMANDE DE SYSTEMES DE RETENUE D'UN VEHICULE

(30) Priorität: 19.03.2004 DE 102004013595
(43) Veröffentlichungstag der Anmeldung: 06.12.2006
(73) Patentinhaber: ROBERT BOSCH GMBH, 70442 Stuttgart (DE)
(72) Erfinder: PANTLE, Markus, 71634 Ludwigsburg (DE)
(86) Internationale Anmeldenummer: PCT/EP2005/050106
(87) Internationale Veröffentlichungsnummer: WO 2005/090129

(56) Entgegenhaltungen:
- EP-A- 1 482 280
- US-A1- 2003 139 883
- US-A1- 2003 149 530
- US-B1- 6 405 132

## Beschreibung

### STAND DER TECHNIK

Die vorliegende Erfindung betrifft ein Verfahren zur Auslöseentscheidung und Ansteuerung von Rückhalteeinrichtungen eines Kraftfahrzeuges.

Derzeitige Ansteuergeräte für Rückhalteeinrichtungen, wie z.B. Front-, Seiten, Knie-Airbags und dergleichen, sowie Gurtstraffer und Gurtkraftbegrenzer, sind mit unterschiedlichen Sensoren verbunden, über die sie Signale mit Informationen über einen möglichen Zusammenstoß und dessen Verlauf erhalten. Diese Informationen werden beispielsweise in Form von digitalen Datensignalen übertragen und im Ansteuergerät mittels geeigneter Software durch einen bestimmten Algorithmus ausgewertet.

Das sogenannte Airbag-Steuergerät berücksichtigt bei seiner Auslöseentscheidung, insbesondere bei einem Überschlagereignis, nur die Sensordaten und daraus abgeleitete Zustandsgrößen wie z.B. die integrierte Drehrate, ab dem Zeitpunkt ,wenn die Sensordaten eine bestimmte Schwelle erreicht haben. Sensorwerte und Zustandswerte aus der Vorgeschichte, d.h. vor Erreichen dieser Schwelle werden nicht berücksichtigt. In diesem Fall bedeutet die Schwelle beispielsweise das Überschreiten eines bestimmten Wertes eines Signals, zum Beispiel der Amplitude des Signals von einem Beschleunigungssensor, einem Drehratensensor oder einer Sensorik, die ein Abheben der Räder von der Fahrbahn erkennt.

Nachteilig dabei ist, daß die Kraftfahrzeugauslenkung bzw. die Ausgangslage des Kraftfahrzeugs kurz vor dem Überschlagereignis nicht berücksichtigt wird. Sie kann auch nur schwer mit Hilfe von Sensoren gebildet werden, da fahrdynamische Größen und Störgrößen wie beispielsweise Erschütterungen durch Unebenheit der Straße und dergleichen, eine Messung überlagern.

Wenn sich das Kraftfahrzeug kurz vor dem Ereignis eines Überschlags nun schon in einer instabilen Lage befindet, wird das nicht bei der Auslöseentscheidung und bei der Ansteuerung der Rückhalteeinrichtungen berücksichtigt. Daraus ergibt sich eventuell eine nicht optimale oder zu späte Auslöseentscheidung für die Rückhalteeinrichtungen.

Weiterhin sind Daten über eine aktuelle Lage bzw. Position, Geschwindigkeit, Fahrtrichtung und Route eines Kraftfahrzeugs in einem Navigationssystem vorhanden, welches in dem Kraftfahrzeug eingebaut ist. Diese Daten werden jedoch bisher nicht für eine Auslöseentscheidung und Ansteuerung von Rückhalteeinrichtungen eines Kraftfahrzeugs genutzt.

Aus US 2003/0139883 A1, das die Merkmale des Oberbegriffs des Anspruchs 1 zeigt, ist es bekannt, anhand von Umfelddaten und kinematischen Daten eine Unfallwahristcheinlichkeit für ein Kraftfahrzeug zu bestimmen. Aus der älteren europäischen Patentanmeldung EP 1482280 A2 ist es bekannt, eine Kollisionsvorhersage zu treffen, wobei dabei Straßeninformationen berücksichtigt werden.

### VORTEILE DER ERFINDUNG

Es wird bei der Erfindung davon ausgegangen, daß im Kraftfahrzeug Rückhalteeinrichtungen mit einer zugehörigen Steuereinrichtung sowie ein Navigationssystem vorhanden ist.

Das erfindungsgemäße Verfahren zur Auslöseentscheidung und Ansteuerung von Rückhalteeinrichtungen eines Kraftfahrzeugs mit den Merkmalen der unabhängigen Patentansprüche hat den Vorteil, Auslöseentscheidungen der Steuerung für Rückhalteeinrichtungen eines Kraftfahrzeugs, wie z.B. Airbags, zu optimieren, sowie den Vorteil, reversible Rückhalteeinrichtungen eines Kraftfahrzeuges, wie z.B. reversiblen Gurtstraffer, schon vorzeitig anzusteuern.

Im folgenden wird die Grundidee der Erfindung erläutert, die darin besteht, dass die im Navigationssystem vorhandenen Daten berücksichtigt und an das Ansteuergerät von Rückhalteeinrichtungen übertragen werden. Mit Hilfe des Navigationssystems werden Position, Geschwindigkeit, Richtung und Route eines Kraftfahrzeugs bestimmt. Mittels geographischem Kartenmaterial, das sich in einem geeigneten Speichermedium befindet, kann ermittelt werden, wo sich das Kraftfahrzeug befindet. Es ist z.B. möglich, mit exaktem topographischen Kartenmaterial in einem Speichermedium beispielsweise seitliche Böschungen, Kurven, Anhöhen und dergleichen einer Route eines Kraftfahrzeugs zu ermitteln. Dabei wird besonderes Augenmerk auf Gefahrenstellen gelegt. Hiermit werden positionsrelevante Soll-Werte für das fahrende Kraftfahrzeug auf einer bestimmten Route für einen oder eine Vielzahl von verschiedenen Orten festgelegt, die das Kraftfahrzeug auf seiner Route passiert. Somit liegt für die Orte, die das Kraftfahrzeug auf seiner Route passiert, jeweils eine Anzahl von Soll-Werten für das Verhalten des Kraftfahrzeugs vor. Diese Soll-Werte werden mit Ist-Werten verglichen, die jeweils aktuell an diesen Orten kraftfahrzeugbezogen ermittelt werden.

Ein solcher Soll-Wert kann z.B. eine erwartete Auslenkung des Kraftfahrzeugs in einer Kurve sein. Das bedeutet, daß das Kraftfahrzeug die Kurve auf einer bestimmten Route durchfährt, wobei beispielsweise bestimmte Seitenbeschleunigungswerte oder Lenkausschläge vorhanden sind. Weicht das Kraftfahrzeug beispielsweise aufgrund von überhöhter Geschwindigkeit von dieser zuvor errechneten Route ab, so ergibt sich bei dem Vergleich zwischen dem Soll- und dem Ist-Wert ein bestimmter schritten zum Bestimmen der positionsrelevanten Soll-Werte des Kraftfahrzeugs von einer Vielzahl von auf der Route des Kraftfahrzeugs liegenden festgelegten Orten und das Ermitteln der Ist-Orientierung des Kraftfahrzeugs mittels der Ist-Werte der Geschwindigkeit und Richtung des Kraftfahrzeugs auf. Dieses ermöglicht eine vorteilhafte Bestimmung des aktuellen Lagezustands des Kraftfahrzeugs.

Es ist weiterhin vorteilhaft, daß das erfindungsgemäße Verfahren beim Vergleichen der Soll- und Ist-Werte des Kraftfahrzeugs das Vergleichen dieses Vergleichsergebnisses von Soll- und Ist-Werten des Kraftfahrzeuges mit einem vorgebbaren Schwellwert und ein Erzeugen eines entsprechenden Signals aufweist. Somit werden auch fahrzeugsspezifische Randbedingungen berücksichtigt.

Eine weitere Ausführungsform des erfindungsgemäßen Verfahrens sieht für das Berücksichtigen dieser Daten zur Auslöseentscheidung und zur Ansteuerung von Rückhaltemitteln ein Übergeben und/oder Bereitstellen entsprechender Daten abhängig von der Soll-Orientierung des Kraftfahrzeugs und ein Übergeben und/oder Bereitstellen entsprechender Daten abhängig von der Ist-Orientierung des Kraftfahrzeugs vor. Hiermit werden die Daten in eine vorteilhaft einfache Form zur Weiterverarbeitung gebracht.

Ein Vorteil der Erfindung besteht darin, daß die Auslöseentscheidungen einer Steuereinrichtung von Rückhalteeinrichtungen optimiert werden, d.h. da die Messdaten und Zustandsgrößen aus der Vorgeschichte mitbenutzt werden, entsprechen die internen Zustandsgrößen besser dem wirklichen Verlauf des Fahrzeuges als ohne. Befindet sich das Fahrzeug beispielsweise vor Überschreiten der Schwelle auf einer Böschung, kann die Auslösung der Rückhalteeinrichtungen (Seiten- und Dach-Airbags) früher und für den Insassen optimaler ausgelöst werden.

Es ist auch vorteilhaft, daß durch die Berücksichtigung von Daten des Navigationssystems und deren Aufbereitung die jeweilige Fahrsituation durch die Steuereinrichtung für Rückhalteeinrichtungen eines Kraftfahrzeugs beurteilt werden kann, ob es sich um eine risikoreiche Fahrweise handelt, bei welcher die Wahrscheinlichkeit eines Überschlagereignisses ansteigt. Dadurch können reversible Rückhaltemittel, wie beispielsweise Gurtstraffer, schon vorzeitig angesteuert werden.

Ein weiterer Vorteil ist die Wirtschaftlichkeit. Wenn ein Kraftfahrzeug schon mit einem Navigationssystem versehen ist, kann die Berücksichtigung der Daten ohne viel Mehraufwand an das Airbag-Steuergerät übermittelt werden, was sich beispielsweise durch ein vorhandenes Bussystem einfach gestaltet. Weiterhin können die Daten vorzugsweise im Airbag-Steuergerät weiterverarbeitet werden.

Ein weiterer Vorteil besteht darin, daß die mit dem erfindungsgemäßen Verfahren berücksichtigten Daten vorausschauend für die Sicherheit eines Kraftfahrzeugs auf seiner Route verwendet werden können. Üblicherweise wird der Fahrer eines Kraftfahrzeugs optisch oder akustisch durch ein Navigationssystem über die vor ihm liegende Route informiert. Das erfolgt durch ein Display des Navigationssystems bzw. durch einen zugehörigen Lautsprecher akustisch. Der Fahrer muß diese Informationen in seine Fahrweise umsetzen. Diese Umsetzung ist nachteilig mit einer bestimmten Reaktionszeit versehen, was unter Umständen zu einer Gefahrensituation führen kann. Außerdem kann der Fahrer das Display des Navigationssystems nicht ständig beobachten. Durch eine vorausschauende Verwendung der durch das erfindungsgemäße Verfahren aufbereiteten Daten können vorteilhafterweise nicht nur die Rückhalteeinrichtungen sensibilisiert und aktiviert werden, sondern es ist denkbar, daß eine automatische Geschwindigkeitsbegrenzung des Kraftfahrzeugs erfolgt. Fahrerseitig führt häufig das optische und akustische Warnen nicht zwangsläufig zu einer Anpassung der Fahrweise an die gegebene Umgebungssituation. ZEICHNUNGEN

Die Erfindung wird nachfolgend anhand der in den Figuren der Zeichnung angegebenen Ausführungsbeispiele näher erläutert.

Dabei zeigen:
- Figur 1: ein Kraftfahrzeug in einer bestimmten Situation auf einer Straße; und
- Figur 2: eine schematische Blockdarstellung einer Ausführungsform der Vorrichtung.

### BESCHREIBUNG DES AUSFÜHRUNGSBEISPIELS

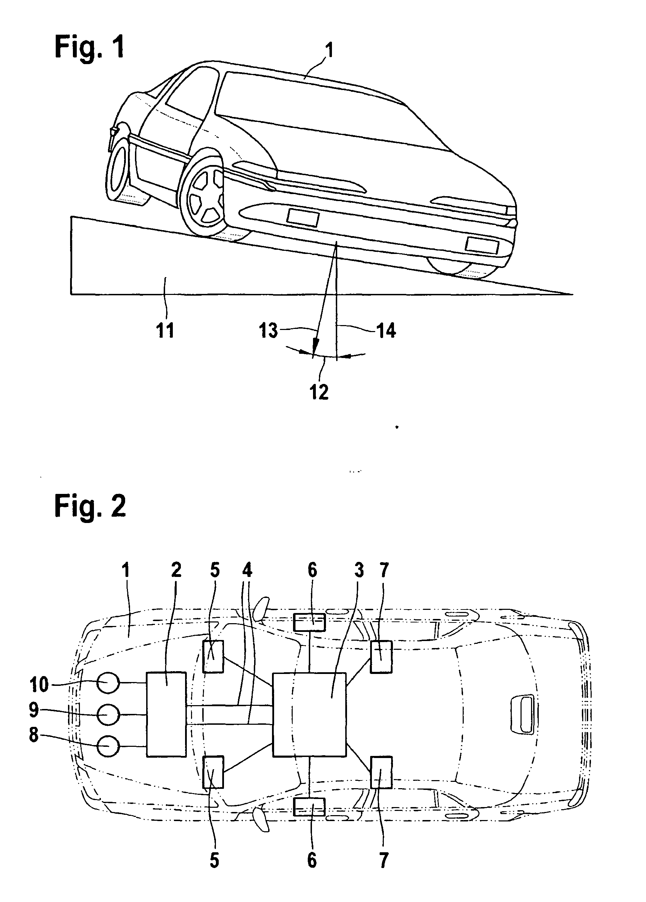

Ein Kraftfahrzeug kann Front-, Seiten-, Fenster-, Kopf-, Knie- und Fuß-Airbags besitzen, sowie Gurtstraffer und Gurtkraftbegrenzer. Diese sogenannten Rückhalteeinrichtungen 5, 6, 7 sind mit einem Airbag-Steuergerät bzw. einer Steuereinrichtung 3 (siehe Figur 2) verbunden. Die Steuereinrichtung 3 erhält ihrerseits Informationen über einen Verlauf eines möglichen Zusammenstoßes von vielen verschiedenen Sensoren. Diese Informationen werden über einen sogenannten Algorithmus mittels Software ausgewertet. Im Falle eines Kraftfahrzeugüberschlages werden bisher bestimmte Informationen über die Ausgangslage eines Kraftfahrzeuges kurz vor dem Überschlag nicht berücksichtigt. Ein Teil dieser Informationen, die eine Ausgangslage eines Kraftfahrzeuges betreffen, sind in einem im Kraftfahrzeug eingebauten Navigationssystem schon vorhanden.

Bei der Erfindung werden die schon vorhandenen Informationen berücksichtigt und an die Steuereinrichtung weitergeleitet.

Eine mögliche Ausgangslage eines Kraftfahrzeugs ist in der Figur 1 dargestellt.

In Figur 1 ist ein Kraftfahrzeug 1 auf einer Straße 11 in einer bestimmten Situation dargestellt. Die Straße 11 ist hier im Querschnitt mit einer Neigung gezeigt. Diese Neigung kann beispielsweise in einer Kurve oder als eine seitliche Böschung vorhanden sein.

Die Position des Kraftfahrzeugs 1 ist durch ein in dem Kraftfahrzeug 1 befindliches Navigationssystem 2 mit Hilfe vorher festgelegter und auch ermittelter Daten aufgrund vorheriger Positionen für Geschwindigkeiten und Richtungen des Kraftfahrzeugs 1 mit einer Soll-Lage 14 bestimmt worden.

In der in Figur 1 gezeigten Fahrsituation des Kraftfahrzeugs 1 ist beispielsweise die Soll-Lage 14 aufgrund von beispielsweise überhöhter Geschwindigkeit nicht eingenommen worden, und das Kraftfahrzeug 1 befindet sich in einer Ist-Lage 13, welche durch einen Pfeil dargestellt ist. Daraus ergibt sich eine Auslenkung 12, welche durch das erfindungsgemäße Verfahren ermittelt und in geeigneter Datenform an eine Steuereinrichtung 3 für Rückhalteeinrichtungen des Kraftfahrzeugs 1 zu einer Auslöseentscheidung und zur weiteren Ansteuerung der Rückhalteeinrichtungen übermittelt wird.

In Figur 2 ist eine schematische Blockdarstellung einer Ausführungsform der gezeigt, anhand derer das erfindungsgemäße Verfahren im weiteren erläutert wird.

Das Kraftfahrzeug 1 ist mit einem Navigationssystem 2 ausgestattet. Dieses Navigationssystem 2 bestimmt in bekannter Form Position, Geschwindigkeit, Richtung der aktuellen Position des Kraftfahrzeugs 1.

Mit Hilfe von geographischem Kartenmaterial aus einer ersten Datenquelle 8, beispielsweise eine CD-ROM oder eine DVD-ROM-Speichermittel, kann ermittelt werden, wo sich das Kraftfahrzeug befindet, z.B. an einer seitlichen Böschung. Aus dieser ersten Datenquelle 8 werden zur aktuellen Position des Kraftfahrzeugs relevante Umgebungsdaten eingelesen. Weitere exakte Umgebungsdaten des Kraftfahrzeugs 1 werden aus einer zweiten Datenquelle 9 eingelesen, welche spezielle Topologie-Daten der jeweiligen Umgebung enthält. Auch die zweite Datenquelle 9 kann beispielsweise ein CD-ROM oder DVD-ROM Speicher sein. Diese Umgebungsdaten können zum Beispiel auch auf bestimmte wichtige Daten und Gefahrenorte eingeschränkt sein.

Weiterhin benutzt das Navigationssystem 2 bekannte Daten aus einer Sensorik 10 des Kraftfahrzeugs, wie beispielsweise Geschwindigkeit, Fahrtrichtung und zurückgelegte Wegstrecke.

Das Navigationssystem 2 bestimmt Soll-Werte für Position, Geschwindigkeit, Richtung und Route des Kraftfahrzeugs 1 für weitere auf der Route des Kraftfahrzeugs 1 liegende Orte. Ebenfalls werden Soll-Werte für die Orientierung des Kraftfahrzeugs 1 anhand der Geschwindigkeit und Richtung des Kraftfahrzeugs 1 für diese Orte bestimmt. Die Bestimmung der Orientierung des Kraftfahrzeugs erfolgt mit Hilfe der Geschwindigkeit und Fahrtrichtung des Kraftfahrzeugs, beispielsweise in Kurven.

Die Position des Kraftfahrzeugs 1 ist durch ein in dem Kraftfahrzeug 1 befindliches Navigationssystem 2 mit Hilfe vorher festgelegter und auch ermittelter Daten aufgrund vorheriger Positionen für Geschwindigkeiten und Richtungen des Kraftfahrzeugs 1 mit einer Soll-Lage 14 bestimmt worden.

In der in Figur 1 gezeigten Fahrsituation des Kraftfahrzeugs 1 ist beispielsweise die Soll-Lage 14 aufgrund von beispielsweise überhöhter Geschwindigkeit nicht eingenommen worden, und das Kraft fahrzeug 1 befindet sich in einer Ist-Lage 13, welche durch einen Pfeil dargestellt ist. Daraus ergibt sich eine Auslenkung 12, welche durch das erfindungsgemäße Verfahren ermittelt und in geeigneter Datenform an eine Steuereinrichtung 3 für Rückhalteeinrichtungen des Kraftfahrzeugs 1 zu einer Auslöseentscheidung und zur weiteren Ansteuerung der Rückhalteeinrichtungen übermittelt wird.

In Figur 2 ist eine schematische Blockdarstellung einer Ausführungsform der erfindungsgemäßen Vorrichtung gezeigt, anhand derer das erfindungsgemäße Verfahren im weiteren erläutert wird.

Das Kraftfahrzeug 1 ist mit einem Navigationssystem 2 ausgestattet. Dieses Navigationssystem 2 bestimmt in bekannter Form Position, Geschwindigkeit, Richtung der aktuellen Position des Kraftfahrzeugs 1.

Mit Hilfe von geographischem Kartenmaterial aus einer ersten Datenquelle 8, beispielsweise eine CD-ROM oder eine DVD-ROM-Speichermittel, kann ermittelt werden, wo sich das Kraftfahrzeug befindet, z.B. an einer seitlichen Böschung. Aus dieser ersten Datenquelle 8 werden zur aktuellen Position des Kraftfahrzeugs relevante Umgebungsdaten eingelesen. Weitere exakte Umgebungsdaten des Kraftfahrzeugs 1 werden aus einer zweiten Datenquelle 9 eingelesen, welche spezielle Topologie-Daten der jeweiligen Umgebung enthält. Auch die zweite Datenquelle 9 kann beispielsweise ein CD-ROM oder DVD-ROM Speicher sein. Diese Umgebungsdaten können zum Beispiel auch auf bestimmte wichtige Daten und Gefahrenorte eingeschränkt sein.

Weiterhin benutzt das Navigationssystem 2 bekannte Daten aus einer Sensorik 10 des Kraftfahrzeugs, wie beispielsweise Geschwindigkeit, Fahrtrichtung und zurückgelegte Wegstrecke.

Das Navigationssystem 2 bestimmt Soll-Werte für Position, Geschwindigkeit, Richtung und Route des Kraftfahrzeugs 1 für weitere auf der Route des Kraftfahrzeugs 1 liegende Orte. Ebenfalls werden Soll-Werte für die Orientierung des Kraftfahrzeugs 1 anhand der Geschwindigkeit und Richtung des Kraftfahrzeugs 1 für diese Orte bestimmt. Die Bestimmung der Orientierung des Kraftfahrzeugs erfolgt mit Hilfe der Geschwindigkeit und Fahrtrichtung des Kraftfahrzeugs, beispielsweise in Kurven.

Bei den auf der Route des Kraftfahrzeugs 1 liegenden Orte kann es sich vorrangig um Orte handeln, bei denen die Wahrscheinlichkeit eines Unfalls erhöht ist Dieses sind beispielsweise Kurven, unübersichtliche Anhöhen, Brücken und dergleichen, welche aus den Datenquellen 8, 9 eingelesen worden sind.

Weiterhin werden durch das Navigationssystem 2 Ist-Werte für Position, Geschwindigkeit, Richtung und Route des Kraftfahrzeugs 1 bestimmt. Ebenfalls wird die Ist-Orientierung des Kraftfahrzeugs 1 mittels der Ist-Werte der Geschwindigkeit und Richtung des Kraftfahrzeugs 1 ermittelt.

Die Sensorik 10 kann außerdem zusätzliche Sensoren aufweisen, welche ein Abheben der Räder des Kraftfahrzeugs 1 von der Fahrbahn erkennen. Die von diesen Sensoren gelieferten Daten werden als weitere Ist-Werte des aktuellen Zustands des Kraftfahrzeugs mit berücksichtigt. Diese Sensoren können aber auch Bestandteil eines Airbag-Steuergerätes sein, wobei deren Signale dann bereits in die Auslöseentscheidung des Airbag-Steuergerätes von diesem mit einbezogen werden.

Das Bestimmen der Soll- und Ist-Werte der Lage des Kraftfahrzeugs 1 mit den Datenquellen 8, 9 kann entweder von dem Navigationssystem 2 oder von einer Einrichtung 4 zur Berücksichtigung von Daten vorgenommen werden. Diese Einrichtung 4 zur Berücksichtigung von Daten kann Bestandteil des Navigationssystems 2 oder eine eigenständige Einheit sein.

Die Einheit 4 zur Berücksichtigung von Daten führt einen Vergleich der zuvor festgelegten bzw. ermittelten. Soll- und Ist-Werte durch und vergleicht diese Ergebnisse mit mindestens einem vorgebbaren Schwell- und/oder Sollwert. Aufgrund dieses Vergleiches wird ein entsprechendes Signal beziehungsweise Datensignal erzeugt. Dieses kann darin bestehen, daß beispielsweise eine Bit-Folge erzeugt wird.

Diese Bit-Folge bzw. entsprechende Daten beinhalten eine Information, die zum einen abhängig von der Soll-Orientierung des Kraftfahrzeugs 1 und auch abhängig von der Ist-Orientierung des Kraftfahrzeugs 1 ist. Diese Daten dienen zur Auslöseentscheidung und zur Ansteuerung von Rückhalteeinrichtungen 5, 6, 7, welche mit einer elektronischen Steuereinrichtung 3 verbunden sind.

Die elektronische Steuereinrichtung 3 kann beispielsweise ein Airbag-Steuergerät sein. Durch die Übermittlung entsprechender Daten abhängig von der Soll- und Ist-Orientierung des Kraftfahrzeugs 1 durch die Einrichtung 4 zur Berücksichtigung von Daten, wird die Auslöseentscheidung für beispielsweise Front- und Seiten-Airbags als Rückhalteeinrichtungen 5, 6 bei einem vorstehenden möglichen Überschlag des Kraftfahrzeugs 1 erleichtert und beschleunigt.

Weiterhin werden die von der Einrichtung 4 zur Berücksichtigung von Daten übermittelten Daten dazu verwendet, Rückhalteeinrichtungen, wie z.B. Gurtstraffer, zu aktivieren, wenn aufgrund von erreichten Schwell- und/oder Sollwerten eine Fahrweise mit erhöhtem Risiko vorliegt.

Alternativ können die Topologie-Daten anstatt über einen lokalen Datenspeicher per Netzwerk von einem nicht im Fahrzeug befindlichen Datenspeicher zur Verfügung gestellt werden, zum Beispiel über eine drahtlose Verbindung wie Satellitenkommunikation.

Die Erfindung ist nicht auf die oben beschriebenen Ausfiihrungsbeispiele beschränkt, sondern auf vielfältige Art und Weise modifizierbar.

So ist es zum Beispiel denkbar, daß die Einrichtung 4 zur Berücksichtigung von Daten in der elektronischen Steuereinrichtung 3 integriert ist, wobei eine entsprechende Datenverbindung zwischen dem Navigationssystem 2 und der elektronischen Steuereinrichtung 3 vorliegt Weiterhin ist es ebenfalls möglich, daß das Navigationssystem 2, die Einrichtung 4 zur Berücksichtigung von Daten und die elektronische Steuereinrichtung 3 über ein gemeinsames Bussystem kommunizieren.

## Patentansprüche

1. Verfahren zur Auslöseentscheidung und Ansteuerung von Rückhalteeinrichtungen (5, 6, 7) eines Kraftfahrzeugs (1), **gekennzeichnet durch** die Verfahrensschritte:
(S1) Ermitteln der aktuellen Position des Kraftfahrzeugs (1);
(S2) Ermitteln von positionsrelevanten Umgebungsdaten des Kraftfahrzeugs (1);
(S3) Bestimmen von positionsrelevanten Sollwerten des Kraftfahrzeugs (1);
(S4) Bestimmen von positionsrelevanten Istwerten des Kraftfahrzeugs (1);
(S5) Vergleichen der Soll- und Ist-Werte; und
(S6) Berücksichtigen dieser Daten zur Auslöseentscheidung und zur Ansteuerung von Rückhalteeinrichtungen (5, 6, 7), wobei mittels eines Navigationssystems die Verfahrensschritte S1 - S4 ausgeführt werden, wobei die positionsrelevanten Umgebungsdaten mittels geografischem Kartenmaterial ermittelt werden, wobei die positionsrelevanten Sollwerte angeben, welche Position, Geschwindigkeit, Richtung und Route an jeweiligen Orten das Kraftfahrzeug haben soll, wobei die positionsrelevanten Istwerte angeben, welche Position, Geschwindigkeit, Richtung und Route an den jeweiligen Orten das Kraftfahrzeug hat.

2. Verfahren nach Anspruch 1, **dadurch gekennzeichnet, dass** der Verfahrensschritt (S2) folgende Teilschritte aufweist:
(S2.1) Einlesen von zur aktuellen Position des Kraftfahrzeugs (1) relevanter Umgebungsdaten aus einer ersten Datenquelle (8); und
(S2.2) Einlesen hierzu positionsrelevanter Topologie-Daten aus einer zweiten Datenquelle (9).

3. Verfahren nach Anspruch 1 oder 2, **dadurch gekennzeichnet, dass** der Verfahrensschritt (S3) folgende Teilschritte aufweist:
(S3.1) Bestimmen von Sollwerten für Position, Geschwindigkeit, Richtung und Route des Kraftfahrzeugs (1) für mindestens einen von einer Vielzahl von auf der Route des Kraftfahrzeugs (1) liegenden Orten; und
(S3.2) Ermitteln von Sollwerten für die Orientierung des Kraftfahrzeugs (1) mittels der Geschwindigkeit und Richtung des Kraftfahrzeugs (1) für mindestens einen von der Vielzahl von auf der Route des Kraftfahrzeugs (1) liegenden durch den Teilschritt (S3.1) festgelegten Orten.

4. Verfahren nach einem der Ansprüche 1 bis 3, **dadurch gekennzeichnet, dass** der Verfahrensschritt (S4) folgende Teilschritte aufweist:
(S4.1) Bestimmen von Istwerten für Position, Geschwindigkeit, Richtung und Route des Kraftfahrzeugs (1) für mindestens einen der in den Teilschritten (S3.1 und S3.2) von einer Vielzahl von auf der Route des Kraftfahrzeugs (1) liegenden festgelegten Orten; und
(S4.2) Ermitteln der Ist-Orientierung des Kraftfahrzeugs (1) mittels der Istwerte der Geschwindigkeit und Richtung des Kraftfahrzeugs (1).

5. Verfahren nach einem der Ansprüche 1 bis 4, **dadurch gekennzeichnet, dass** der Verfahrensschritt (S5) folgende Teilschritte aufweist:
(S5.1) Vergleichen des Vergleichsergebnisses von Soll- und Istwerten des Kraftfahrzeugs (1) mit einem vorgebbaren Schwellwert; und
(S5.2) Erzeugen eines entsprechenden Signals.

6. Verfahren nach einem der Ansprüche 1 bis 5, **dadurch gekennzeichnet, dass** der Verfahrensschritt (S6) folgende Teilschritte aufweist:
(S6.1) Übergeben und/oder Bereitstellen entsprechender Daten abhängig von der Soll-Orientierung des Kraftfahrzeugs (1); und
(S6.2) Übergeben und/oder Bereitstellen entsprechender Daten abhängig von der Ist-Orientierung des Kraftfahrzeugs (1).

## Claims

1. Method for making triggering decisions and actuating restraint devices (5, 6, 7) of a motor vehicle (1), **characterized by** the method steps:
(S1) detection of the current position of the motor vehicle (1);
(S2) detection of position-related surroundings data of the motor vehicle (1);
(S3) determination of position-related setpoint values of the motor vehicle (1);
(S4) determination of position-related actual values of the motor vehicle (1);
(S5) comparison of the setpoint and actual values; and
(S6) consideration of these data in the triggering decisions and in the actuation of restraint devices (5, 6, 7), wherein the method steps (S1 - S4) are carried out by means of a navigation system, wherein the position-related surroundings data are detected by means of geographic map material, wherein the position-related setpoint values specify which position, speed, direction and route the motor vehicle is to have at respective locations, wherein the position-related actual values specify which position, speed, direction and route the motor vehicle has at the respective locations.

2. Method according to Claim 1, **characterized in that** the method step (S2) has the following substeps:
(S2.1) reading in of surroundings data which are relevant to the current position of the motor vehicle (1) from a first data source (8); and
(S2.2) reading in of position-related topology data for this purpose from a second data source (9).

3. Method according to Claim 1 or 2, **characterized in that** the method step (S3) has the following substeps:
(S3.1) determination of setpoint values for the position, speed, direction and route of the motor vehicle (1) for at least one of a plurality of locations on the route of the motor vehicle (1); and
(S3.2) detection of setpoint values for the orientation of the motor vehicle (1) by means of the speed and direction of the motor vehicle (1) for at least one of the plurality of locations on the route of the motor vehicle (1) which are specified by the substep (S3.1).

4. Method according to one of Claims 1 to 3, **characterized in that** the method step (S4) has the following substeps:
(S4.1) determination of actual values for the position, speed, direction and route of the motor vehicle (1) for at least one of a plurality of locations on the route of the motor vehicle (1) which are specified in the substeps (S3.1 and S3.2); and
(S4.2) detection of the actual orientation of the motor vehicle (1) by means of the actual values of the speed and direction of the motor vehicle (1).

5. Method according to one of Claims 1 to 4, **characterized in that** the method step (S5) has the following substeps:
(S5.1) comparison of the comparison result of the setpoint values and actual values of the motor vehicle (1) with a predefinable threshold value; and
(S5.2) generation of a corresponding signal.

6. Method according to one of Claims 1 to 5, **characterized in that** the method step (S6) has the following substeps:
(S6.1) transfer and/or provision of corresponding data as a function of the setpoint orientation of the motor vehicle (1); and
(S6.2) transfer and/or provision of corresponding data as a function of the actual orientation of the motor vehicle (1).

## Revendications

1. Procédé pour décider du déclenchement et pour commander des installations de retenue (5, 6, 7) d'un véhicule automobile (1),
**caractérisé par** les étapes suivantes :
(S1) déterminer la position actuelle du véhicule (1),
(S2) déterminer les données d'environnement caractéristiques de la position du véhicule automobile (1),
(S3) déterminer les valeurs de consigne concernant la position du véhicule automobile (1),
(S4) déterminer les valeurs réelles concernant la position du véhicule automobile (1),
(S5) comparer les valeurs de consigne et les valeurs réelles et
(S6) tenir compte de ces données pour la décision de déclenchement et pour commander les installations de retenue (5, 6, 7),
et à l'aide d'un système de navigation on exécute les étapes de procédé S1-S4, en déterminant les données d'environnement concernant la position à l'aide de matériel cartographique, géographique,
on indique les valeurs de consigne concernant la position, donnant la position, la vitesse, la direction et le trajet à l'emplacement respectif du véhicule, les valeurs réelles concernant la position étant la position, la vitesse, la direction et le trajet à l'emplacement respectif du véhicule.

2. Procédé selon la revendication 1,
**caractérisé en ce que**
l'étape de procédé (S2) est subdivisée en étapes partielles suivantes :
(S2.1) enregistrement des données d'environnement concernant la position actuelle du véhicule automobile (1) à partir d'une première source de données (8) et
(S2.2) enregistrement des données topologiques concernant la position à partir d'une seconde source de données (9).

3. Procédé selon la revendication 1 ou 2,
**caractérisé en ce que**
l'étape de procédé (S3) comprend les étapes partielles suivantes :
(S3.1) déterminer les valeurs de consigne de la position de la vitesse de la direction et du trajet du véhicule automobile (1) pour au moins un des emplacements parmi les nombreux emplacements sur le trajet du véhicule automobile (1) et
(S3.2) déterminer les valeurs de consigne pour l'orientation du véhicule automobile (1) à l'aide de la vitesse et de la direction du véhicule automobile (1) pour au moins l'un des points fixés par l'étape partielle (S3.1), situé sur le trajet du véhicule automobile (1).

4. Procédé selon l'une des revendications 1 à 3,
**caractérisé en ce que**
l'étape de procédé (S4) comprend les étapes partielles suivantes :
(S4.1) déterminer les valeurs réelles de la position de la vitesse de la direction et du trajet du véhicule automobile (1) pour au moins l'un des emplacements fixes situés dans les étapes partielles (S3.1 et S3.2) parmi un grand nombre d'emplacements situés sur le trajet du véhicule automobile (1) et
(S4.2) déterminer l'orientation réelle du véhicule automobile (1) à l'aide de la valeur réelle de la vitesse et de la direction du véhicule (1).

5. Procédé selon l'une des revendications 1 à 4,
**caractérisé en ce que**
l'étape de procédé (S5) comprend les étapes partielles suivantes :
(S5.1) comparer le résultat de la comparaison entre les valeurs de consigne et les valeurs réelles du véhicule automobile (1) avec un seuil prédéfini et
(S5.2) générer un signal correspondant.

6. Procédé selon l'une des revendications 1 à 5,
**caractérisé en ce que**
l'étape de procédé (S6) comprend les étapes partielles suivantes :
(S6.1) transmettre et/ou fournir des données correspondantes dépendant de l'orientation de consigne du véhicule automobile (1) et
(S6.2) transmettre et/ou fournir des données correspondantes dépendant de l'orientation réelle du véhicule (1).
